Europäisches Patentamt

(19) European Patent Office

Office européen des brevets

(11) Numéro de publication : **0 292 358 B1**

(12) **FASCICULE DE BREVET EUROPEEN**

(45) Date de publication du fascicule du brevet :
06.03.91 Bulletin 91/10

(51) Int. Cl.⁵ : **B62D 1/10, F16D 1/12**

(21) Numéro de dépôt : **88401120.6**

(22) Date de dépôt : **06.05.88**

(54) **Dispositif d'accouplement d'un volant à son arbre et son application au calage d'un volant de direction d'automobile.**

(30) Priorité : **19.05.87 FR 8706971**

(43) Date de publication de la demande :
**23.11.88 Bulletin 88/47**

(45) Mention de la délivrance du brevet :
**06.03.91 Bulletin 91/10**

(84) Etats contractants désignés :
**BE DE ES GB IT NL SE**

(56) Documents cités :
**DE-B- 1 094 610
GB-A- 199 959**

(73) Titulaire : **NACAM Société dite:
Route de Blois
F-41100 Vendome (FR)**

(72) Inventeur : **Haldric, Bernard
15, rue Charles Lindbergh
F-41100 Vendome (FR)**
Inventeur : **Baudon, Sylvie
3, rue Edgar Degas, Naveil
F-41100 Vendome (FR)**

(74) Mandataire : **Mestre, Jean et al
c/o CABINET LAVOIX 2, place d'Estienne
d'Orves
F-75441 Paris Cédex 09 (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention a pour objet un dispositif d'accouplement d'un volant à son arbre autorisant leur calage relatif initial tant angulaire qu'axial. Elle concerne plus particulièrement un dispositif de ce type pour associer notamment le volant d'une direction d'automobile à l'arbre de la colonne de direction qui le porte.

Pour certaines applications, il est nécessaire de pouvoir choisir le calage relatif initial tant angulaire qu'axial d'un volant sur son arbre. C'est le cas en matière automobile.

Comme on le sait, les volants servant à la conduite des automobiles sont généralement fixés sur leur arbre de la colonne de direction à l'aide de cannelures associées à des filetages et à des cônes. Ceci permet de transmettre sans jeu le couple développé par le conducteur de l'automobile aux roues directrices. Certains volants sont contruits sous forme de pièce monobloc, d'autres sont directement soudés à l'arbre.

Pour des raisons d'esthétique et aussi d'agrément, il est nécessaire de pouvoir choisir et fixer au moment de la construction du véhicule le calage relatif initial tant angulaire qu'axial du volant sur son arbre.

Un tel calage angulaire initial a pour but de faire coïncider la position des roues directrices du véhicule correspondant à la ligne droite à la position symétrique des branches du volant par rapport à un plan parallèle au plan médian longitudinal du véhicule. En effet, il est très déplaisant, et même parfois gênant, pour le conducteur que lorsque les roues directrices sont orientées pour la direction de ligne droite le volant ne soit pas lui rigoureusement dans une attitude comparable. Comme il est connu, ceci est difficile à obtenir directement de fabrication et les techniques actuellement utilisées ne permettent pas commodément un tel réglage final au montage.

D'autre part, pour des raisons de présentation, il est nécessaire de pouvoir ménager un certain jeu entre la partie inférieure du volant et l'habillage du poste de conduite d'où le besoin d'une faculté de calage axial. Tout ceci est difficile à obtenir systématiquement compte tenu des dispersions des dimensions des pièces et celles des cotes résultant de l'assemblage final des pièces sur le poste de conduite.

On comprend donc qu'il est nécessaire de disposer d'une possibilité pour assurer un tel ajustement angulaire et/ou axial du volant sur son arbre qui n'a rien à voir avec le réglage du poste de conduite qui existe sur certains véhicules de haut de gamme pour tenir compte de la morphologie du conducteur, de son style de conduite et de la géométrie de l'habitacle et des sièges.

La technique classique habituellement utilisée pour résoudre ce problème fait appel à des cannelures allongées et à un arbre ou un moyeu fendu et à un appui cônique qui permettent de plaquer vigoureusement la pièce cannelée et fendue sur la pièce massive. Ce type de solution présente des inconvénients car il exige l'utilisation de pièces supplémentaires, un usinage de grande précision des cônes pour obtenir un placage correct et un ajustement angulaire qui n'est pas progressif car lié au pas des cannelures.

Lorsqu'on désire avoir un ajustement progressif il faut s'affranchir du pas des cannelures, on doit alors interposer un système intermédiaire ; ceci impose un surcoût en pièces et en main d'oeuvre pour le montage.

L'invention vise à résoudre tous ces inconvénients à l'aide d'un dispositif simple et peu coûteux qui permet un réglage exact et progressif, tant angulaire qu'axial, notamment au moment du montage d'un volant à son arbre et qui n'exige pas de pièces supplémentaires.

L'invention a pour objet un dispositif d'accouplement d'un volant sur son arbre autorisant leur calage relatif initial progressif tant angulaire qu'axial, comme exposé dans le préambule de la revendication principale, et dont les particularités ressortent notamment de la partie caractérisante de cette revendication.

L'invention a aussi pour objet l'application d'un tel dispositif d'accouplement au montage d'un volant de direction d'automobile sur l'arbre de la colonne de direction de ce dernier.

D'autres caractéristiques de l'invention apparaîtront à la lecture de la description et des revendications qui suivent et à l'examen des dessins annexés, donnés seulement à titre d'exemple, où :

– la Fig.1 est une vue perspective schématique de la partie supérieure d'une colonne de direction où les flèches illustrent les deux degrés de liberté initiaux qu'autorise le dispositif selon l'invention ;

– les Fig.2A, 2B et 2C sont des coupes, par un plan perpendiculaire à l'axe de l'arbre, de variantes de réalisation du dispositif selon l'invention ;

– la Fig.3 illustre une coupe par un plan méridien axial de la colonne d'un des modes de réalisation de la Fig.2 ;

– la Fig.4 est une vue analogue à celle de la Fig.2 d'une autre variante de réalisation ;

– les Fig.5 et 6 sont respectivement une coupe longitudinale et une vue de dessus d'un autre mode de réalisation ;

– les Fig.7A et 7B sont des vues analogues aux vues des Fig.2A et 2B, respectivement de variantes d'exécution ; et

– les Fig.8A et 8B sont des vues de détail des parties A et B de la Fig.3 notablement agrandies.

Les modes de réalisation de l'invention seront plus particulièrement décrits dans leur application à une colonne de direction d'un véhicule automobile. C'est pourquoi la description sera limitée à tout ce qui concerne directement et indirectement l'invention. Tout le reste fait partie de la technique classique où l'homme du métier du secteur considéré peut puiser des solutions autres pour les choisir en fonctions des contraintes régnant et des buts qui lui sont assignés.

Comme on le voit, un volant 10 d'un véhicule automobile comprend un cercle 13 auquel sont reliées des branches 12, par exemple deux, qui portent un moyeu 11.

Ce volant est fixé à une colonne de direction qui comprend, essentiellement, un arbre 20 qui présente un fût 22 terminé par un embout 21. Cet arbre est logé dans un fourreau 30 maintenu à la structure du véhicule, non représentée, par des étriers 31 par exemple. Toute cette partie se trouve logée dans un boîtier ou gaine 40 dont la conformation est adaptée à celle de la planche et du tableau de bord, comme il est classique.

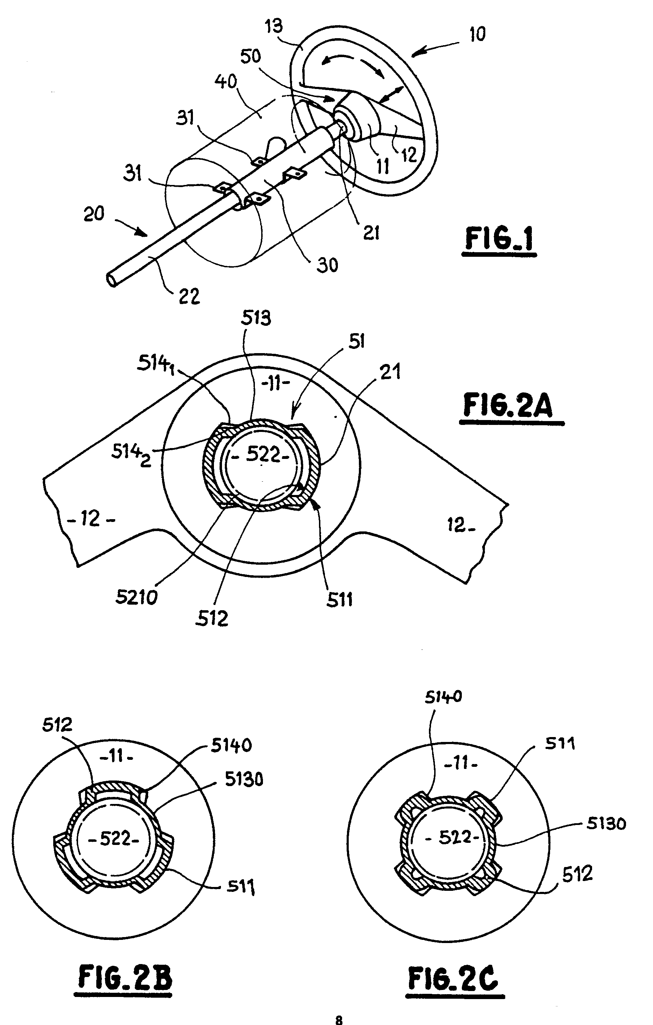

Comme indiqué précédemment, au moment des opérations de montage et d'assemblage du véhicule il est nécessaire de fixer l'orientation angulaire du volant de manière que lorqu'il est dans sa position moyenne neutre, il ait une attitude qui corresponde à celle des roues directrices du véhicule orientées en position "ligne droite" ; ceci est illustré par les deux flèches en arc de cercle de sens opposés sur la Fig.1.

Il faut aussi pouvoir ajuster en profondeur la position du volant, c'est-à-dire dans le sens axial de l'arbre, de manière que la distance qui sépare la partie postérieure du moyeu de la partie antérieure qui lui fait face du boîtier ou gaine ait une valeur constante indépendante des tolérances de fabrication et d'assemblage ; cette latitude de calage axial est illustrée par une flèche rectiligne double sur la Fig.1.

Comme on le voit, notamment sur les Fig.2 et suivantes, le dispositif d'accouplement 50 suivant l'invention, autorisant un calage initial tant angulaire qu'axial, comprend un clabot 51 fait d'éléments mâles 512 et d'éléments femelles 511 engagés les uns dans les autres. Comme cela apparait sur les diverses coupes par un plan perpendiculaire à l'axe du fût 22 de l'arbre 20 de colonne de direction, ces éléments mâles 512 et femelles 511 complémentaires engagés les uns dans les autres forment des appuis circulaires périphériques 513 qui délimitent, entre eux, des butées radiales mâles $514_2$ et femelles $514_1$. Une telle configuration permet donc d'obtenir des protubérances mâles 512 engagées dans des alvéoles femelles 511 entre des arcs de cercle 5130 et des méplats 5140.

Pour la commodité, quelle que soit la variante d'exécution d'un dispositif selon l'invention, les mêmes numéros de référence désignent toujours un même élément.

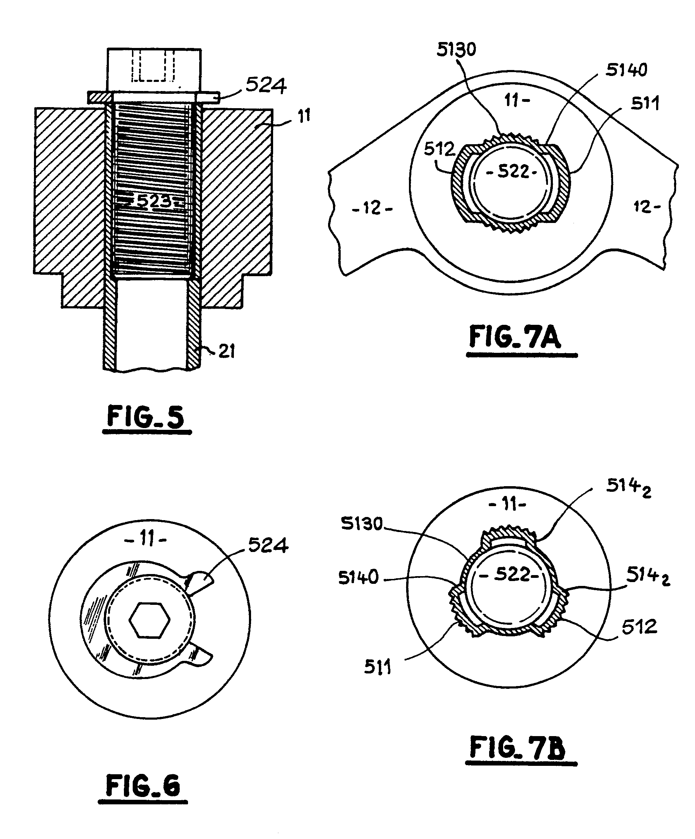

Comme on le voit, à l'origine, à l'état initial, au moment où on engage le moyeu 11 du volant sur l'embout 21 du fût de l'arbre, les appuis périphériques cylindriques 513 n'ont pratiquement pas de jeu, les arcs de cercle mâles et femelles étant pratiquement de même rayon avec une tolérance juste suffisante pour l'engagement sans difficulté importante alors qu'il existe un jeu notable, un interstice entre les méplats 5140 des butées radiales $514_2$ mâles et $514_1$ femelles et qu'il peut exister un certain jeu ou intervalle entre les surfaces en vis-à-vis des protubérances et alvéoles, cet intervalle n'étant pas critique mais ne devant pas gêner la mise en place du moyeu sur l'embout ; ceci apparaît clairement à l'examen des Fig.2 et 4 du dessin notamment. L'interstice entre les méplats des butées radiales mâles et femelles fixe l'amplitude maximale de la rotation relative autorisée.

Le dispositif d'accouplement 50 selon l'invention comprend aussi des moyens d'expansion centrifuge 52 de ceux mâles des appuis 513 pour provoquer l'immobilisation en rotation et en translation, par frottement, des arcs de cercle 5130 des appuis périphériques cylindriques mâles et femelles les uns sur les autres de l'embout et du moyeu.

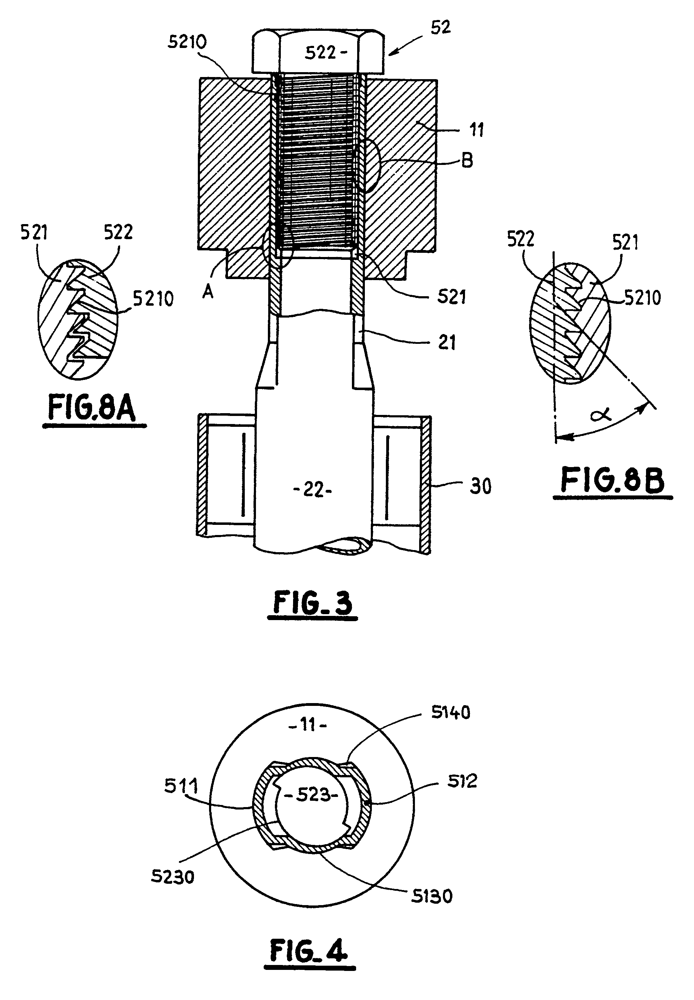

Selon le mode de réalisation illustré sur les Fig.2 et 3, ces moyens d'expansion centrifuge 52 sont constitués d'une vis 522 dont les filets 5210 présentent des flancs non repérés ; cette vis est engagée directement sans intermédiaire dans un logement 521 lui aussi taraudé de manière à présenter des filets adaptés avec des flancs complémentaires. De préférence comme illustré sur les Fig.8A et 8B ces filets présentent une section droite en forme d'un triangle rectangle de manière à ce que l'un des flancs soit perpendiculaire à l'axe du fût 22 de l'arbre ; ce flanc perpendiculaire est celui qui sur la vis 522 est orienté vers l'intérieur de l'embout 21 et qui sur ce dernier est orienté vers l'extérieur. On comprend donc que lorsqu'on serre la vis 522 et/ou qu'on la bloque on produit un effort qui se développe suivant une composante centrifuge qui provoque l'expansion des appuis cylindriques 513 mâles qui engendrent ainsi un contact énergique des arcs de cercle 5130.

Lorsque cette vis n'est pas très serrée et/ou bloquée énergiquement, il est possible de régler la position tant angulaire qu'axiale du volant 10 sur l'embout 21 de l'arbre 20 ; le volant étant placé dans la position recherchée, on immobilise le moyeu 11 sur l'embout 21 en serrant fort la vis 522.

On voit donc que grâce à l'utilisation d'un embout de l'arbre de section cylindrique non-circulaire avec un petit nombre de protubérances radiales qui servent de butées angulaires on obtient un entraînement par frottement ; le nombre de protubérances est, de préférence, compris entre deux et seize.

La surface et l'amplitude de l'expansion des portées cylindriques à base circulaire sont prévues pour assurer un entraînement par frottement suffisant pour des conditions habituelles de conduite où il s'agit de transmettre un couple de l'ordre de 4 à 12 m/kg. Les butées angulaires $514_1$ et $514_2$ femelles du moyeu 11 et mâles de l'embout 21, respectivement, prennent le relais si après glissement relatif, exceptionnel, à la suite d'un choc ou d'une tentative de vol par exemple, il était nécessaire de transmettre des couples qui dépassent les valeurs usuelles, l'interstice ou jeu circulaire entre protubérances et alvéoles s'étant résorbé.

Sur les Fig.2A, 2B et 2C, on a représenté des modes de réalisation qui comprennent deux, trois et quatre protubérances et alvéoles, respectivement.

L'ajustement angulaire est obtenu en créant entre l'embout de l'arbre et la forme cylindrique conjuguée du moyeu du volant le nombre d'alvéoles nécessaire aux différentes positions angulaires envisageables ; les protubérances peuvent être faites anguleuses ou arrondies, comme cela apparaît par exemple sur les Fig.2A, 2B et 2C respectivement.

Comme on l'a indiqué, l'expansion radiale des portées cylindriques est obtenue dans ces modes de réalisation par une vis logée dans l'axe de l'embout et, de préférence, prenant appui sur l'extrémité de celui-ci. De la sorte l'expansion résulte de la réaction sur les flancs du filetage.

Au lieu d'utiliser un filetage à section droite en triangle rectangle, comme indiqué, on peut utiliser un filet normalisé. Toutefois, on observera que pour obtenir l'expansion optimale, il faut que l'angle $\alpha$ des filets (Fig.8B) soit aussi petit que possible compte tenu de la diminution de portée entraînée par la dilatation centrifuge de l'embout de l'axe du volant qui dépend, elle même, du jeu moyen et des tolérances des différentes parties assemblées. De préférence, on utilise un angle compris entre 10 et 60°.

L'amplitude du réglage axial est obtenu par la différence de longueur entre la partie cylindrique de l'embout de l'arbre du volant et celle du moyeu.

Pour des raisons de sécurité, la longueur axiale du moyeu est de préférence plus grande que la zone filetée de l'embout. De la sorte, on obtient une sécurité d'entraînement en cas de rupture due à la fatigue de la zone filetée si l'on dépasse la valeur ou la limite admissible. C'est ce qui est illustrée sur les Fig.3 et 5.

Toujours pour des raisons de sécurité, les derniers filets de la vis d'expansion 522, c'est-à-dire ceux les plus engagés dans l'embout, peuvent être un peu sous-dimensionnés par rapport à la partie active de la vis pour avoir localement du jeu afin de garantir une certaine retenue axiale en cas de rupture par fatigue, comme évoquée précédemment ; ceci est illustré sur la Fig.8A. On peut faire aussi en sorte que l'enveloppe des sommets des filets de vis présente une conicité convergeant de l'extérieur vers l'intérieur de l'embout. On peut bien sûr faire l'inverse si se sont les filets taraudés dans l'embout qui n'ont pas une enveloppe cylindrique.

Pour des raisons de commodité d'usinage on prévoit, de préférence, un dégagement cylindrique à l'extrémité du filetage intérieur de l'embout pour faciliter l'ébavurage ou le supprimer après mise à longueur.

Comme il est bien connu, ce filetage intérieur de l'embout peut être obtenu par une opération classique par enlèvement de copeaux ou bien par martelage sur un mandrin fileté engagé puis sorti par dévissage martelage achevé.

La fabrication d'un tel filetage intérieur par martelage peut être obtenu aussi à l'aide d'une vis suffisamment dure et de précision de bonne qualité qui sert alors elle-même de mandrin ; si l'on fabrique un filetage par martelage dans ces conditions on peut donner à la vis un renflement terminal initial, non illustré, de manière à obtenir une sécurité supplémentaire contre un dégagement accidentel de celle-ci de l'embout ; un tel renflement reste alors prisonnier de l'arbre creux dont le diamètre initial qui a permis son insertion a été réduit par le martelage qui a façonné le filetage ; ceci n'est pas illustré. On obtient une course de vissage suffisante pour assurer l'expansion des portées cylindriques en dévissant cette vis prisonnière et en interposant entre la tête de la vis et l'extrémité de l'embout un anneau de retenue 524 ; cet anneau de retenue assure la retenue axiale du moyeu du volant. On utilise une vis dont le diamètre de la tête est inférieur à celui de la portée cylindrique et l'anneau de retenue est engagé après que le moyeu du volant ait été enfilé ; ceci ressort des figures 5 et 6.

Selon une autre variante de réalisation illustrée sur la Fig.4, au lieu d'utiliser une vis 522 on se sert d'un noyau 523 qui présente des volutes de cames 5230, par exemple en spirale, mâles qui coopère avec des surfaces femelles complémentaires de l'embout. Le fonctionnement est similaire ; en faisant tourner le noyau 523 par exemple à l'aide d'une clé Allen engagée dans une empreinte correspondante, on provoque une expansion centrifuge des surfaces d'appuis périphériques cylindriques en arc de cercle 5130.

On assure l'immobilisation axiale du moyeu à l'aide d'une goupille ou d'un jonc, classique, et la retenue axiale de la came par un renflement à l'extrémité sans tête.

Dans le cas extrême où l'on ne souhaite pas pouvoir bénéficier de l'ajustement angulaire du volant comme on vient de l'indiquer, on peut ménager dans la zone cylindrique à base circulaire et/ou sur les protubérances de l'embout des stries, cannelures ou analogues longitudinales qui coopèrent avec des profils complémentaires du moyeu comme illustré sur les Fig.7A et 7B. Ceci peut se faire avec ou sans jeu entre les butées radiales $514_1$ et $514_2$.

On comprend donc tout l'intérêt du dispositif suivant l'invention, en particulier, pour le cas des directions de véhicules automobiles du fait de sa très grande simplicité, ce dispositif ne comprenant que le nombre minimum minimorum de pièces.

Il est clair que ce dispositif trouve aussi application dans d'autres secteurs techniques où il est nécessaire de disposer d'une certaine latitude de réglage continu tant axial qu'angulaire tout en conservant une sécurité sur la transmission d'un couple.

**Revendications**

1. Dispositif d'accouplement (50) d'un volant (10) à son arbre (20) autorisant leur calage relatif initial progressif tant angulaire qu'axial caractérisé en ce qu'il comprend un clabot (51) fait d'éléments mâles (512) et femelles (511) complémentaires coopérant qui sont portés les uns par un moyeu (11) solidaire du volant (10) et les autres par un embout (21) de l'arbre (20) et qui sont configurés pour présenter une série d'appuis périphériques cylindriques (513) et pour ménager entre deux de ces appuis (513) successifs des butées radiales (514) qui se font face avec un jeu angulaire déterminé autorisant une rotation relative d'amplitude maximale fixée et qui délimitent entre elles des alvéoles (511) et des protubérances (512) engagés les uns dans les autres, et des moyens d'expansion (52) centrifuge logés directement au moins partiellement dans cet embout (21) pour provoquer une dilatation radiale de la série d'appuis mâles (513) afin d'obtenir normalement une immobilisation par frottement du moyeu (11) sur l'embout (21) et exceptionnellement un blocage en rotation par contact des butées.

2. Dispositif selon la revendication 1, caractérisé en ce que les appuis périphériques cylindriques (513) des éléments mâles et femelles se font face initialement pratiquement sans jeu radial.

3. Dispositif selon l'une quelconque des revendications 1 ou 2, caractérisé en ce que les moyens d'expansion (52) sont constitués par une vis (522) et par un logement (521) taraudé correspondant dans l'embout (21) pour la recevoir et ce que l'enveloppe des sommets des filets de vis présente s'il y a lieu une conicité convergeant de l'extérieur vers l'intérieur de l'embout (21).

4. Dispositif selon la revendication 3, caractérisé en ce que les filets ont une section droite en triangle rectangle de manière à présenter un flanc perpendiculaire à l'axe du filetage.

5. Dispositif selon la revendication 4, caractérisé en ce que ce flanc perpendiculaire est celui qui sur la vis est orienté vers l'intérieur de l'embout (21) et qui sur l'embout (21) est orienté vers l'extérieur de manière à développer au serrage une composante centrifuge qui provoque la dilatation de l'embout (21) dans le moyeu (11).

6. Dispositif selon l'une quelconque des revendications 3 à 5, caractérisé en ce que les filets du logement (521) et de la vis (522) qui se font face à proximité de l'extrémité de celle-ci engagée dans l'embout (21) présentent localement du jeu.

7. Dispositif selon l'une quelconque des revendications 1 ou 2, caractérisé en ce que les moyens d'expansion (52) sont constitués par un noyau (523) à au moins deux volutes (5230) de came et par un logement (521) profilé correspondant complémentaire dans l'embout (21) pour le recevoir de manière que la rotation du noyau (523) dans le logement (521) presse les volutes (5230) correspondantes complémentaires les unes contre les autres afin de développer une composante centrifuge qui provoque la dilatation de l'embout (21) dans le moyeu (11).

8. Dispositif selon l'une quelconque des revendications 1 à 7, caractérisé en ce que la série d'appuis périphériques cylindriques (513) comprend au moins en section droite deux arcs de cercle (5130).

9. Dispositif selon l'une quelconque des revendications 1 à 8, caractérisé en ce que la longueur axiale utile des moyens d'expansion (52) est moindre que celle du moyeu (11).

10. Dispositif selon l'une quelconque des revendications 1 à 9, caractérisé en ce que le nombre de protubérances (512) et d'alvéoles (511) complémentaires est de préférence compris entre 2 et 16.

11. Application du dispositif conforme à l'une quelconque des revendications 1 à 10 au calage d'un volant (10) de direction automobile sur son arbre (20) notamment au montage pour lui donner au repos une orientation qui correspond à celle des roues directrices en ligne droite et/ou une profondeur imposée.

**Ansprüche**

1. Vorrichtung (50) zur Verbindung eines Lenkrads (10) mit der Lenksäule (20), die deren progressive Anfangseinstellung zueinander sowohl winkelmäßig als auch axial gestattet, gekennzeichnet durch eine Kupplung (51), die aus zusammenwirkenden, einander ergänzenden einsteckbaren Elementen (512) und aufnehmenden Elementen (511) besteht, deren eine von einer an dem Lenkrad (10) befestigten Nabe (11) und deren andere von einem Endstück (21) der Lenksäule (20) getragen sind und die so ausgebildet sind, daß sie eine Reihe von zylindrischen Umfangsauflagebereichen (513) bilden und zwischen zwei aufeinanderfolgenden Auflagebereichen (513) radiale Anschläge (514) formen, die sich mit einem bestimmten Winkelspiel einander gegenüberstehen, das eine Relativdrehung mit festgelegter maximaler Amplitude zuläßt, und miteinander ineinander greifende Vorsprünge (512) und Vertiefungen (511) abgrenzen, und durch Einrichtungen (52) zur zentrifugalen Dehnung, die wenigstens teilweise direkt in dem Endstück (21) sitzen und eine radiale Dehnung der Reihe von einsteckbaren Auflagebereichen (513) bewirken, um normalerweise einen Reibschluß zwischen Nabe (11) und Lenksäulen-Endstück (21) und in Ausnahmen eine Blockierung bezüglich Drehung durch Kontakt der Anschläge zu bewirken.

2. Vorrichtung nach Anspruch 1, dadurch gekennzeichnet, daß sich die zylindrischen Umfangsauflagebereiche (513) der einsteckbaren und aufnehmenden Elemente ursprünglich praktisch ohne radiales Spiel gegenüberstehen.

3. Vorrichtung nach einem der Ansprüche 1 und 2, dadurch gekennzeichnet, daß die Dehnungseinrichtungen (52) aus einer Schraube (522) und einer entsprechenden, diese aufnehmenden Gewindebohrung (521) in dem Endstück (21) bestehen und daß die Umhüllende der Scheitel der Gewindegänge der Schraube gegebenenfalls eine von außen auf das Innere des Endstücks (21) zu konvergierende Konizität besitzt.

4. Vorrichtung nach Anspruch 3, dadurch gekennzeichnet, daß die Gewindegänge im Querschnitt die Form eines rechtwinkligen Dreiecks besitzen, so daß sie eine zur Achse des Gewindes senkrechte Flanke haben.

5. Vorrichtung nach Anspruch 4, dadurch gekennzeichnet, daß die senkrechte Flanke diejenige ist, die auf der Schraube auf das Innere des Endstücks (21) zu und auf dem Endstück (21) nach außen gerichtet ist, so daß beim Anziehen der Schraube eine zentrifugale Komponente entwickelt wird, die die Dehnung des Endstücks (21) in der Nabe (11) bewirkt.

6. Vorrichtung nach einem der Ansprüche 3 bis 5, dadurch gekennzeichnet, daß die Gewindegänge der Bohrung (521) und der Schraube (522), die sich in Nähe des in das Endstück (21) eingeschraubten Schraubenendes gegenüberstehen, örtlich ein Spiel besitzen.

7. Vorrichtung nach einem der Ansprüche 1 oder 2, dadurch gekennzeichnet, daß die Dehnungseinrichtungen (52) aus einem Kern (523) mit wenigstens zwei spiralförmigen Nockenflächen (5230) und einer diesen aufnehmenden, ergänzend geformten Ausnehmung (521) in dem Endstück (21) bestehen, so daß die einander ergänzenden spiralförmigen Nockenflächen (5230) durch die Drehung des Kerns (523) in der Ausnehmung (521) gegeneinandergepreßt werden, um eine zentrifugale Komponente zu entwickeln, die die Dehnung des Endstücks (21) in der Nabe (11) bewirkt.

8. Vorrichtung nach einem der Ansprüche 1 bis 7, dadurch gekennzeichnet, daß die Reihe von zylindrischen Umfangsauflagebereichen (513) im Querschnitt wenigstens aus zwei Kreisbögen (5130) besteht.

9. Vorrichtung nach einem der Ansprüche 1 bis 8, dadurch gekennzeichnet, daß die axiale Nutzlänge der Dehnungseinrichtungen (52) kleiner als die der Nabe (11) ist.

10. Vorrichtung nach einem der Ansprüche 1 bis 9, dadurch gekennzeichnet, daß die Anzahl der einander ergänzenden Vorsprünge (512) und Vertiefungen (511) vorzugsweise zwischen zwei und sechzehn liegt.

11. Anwendung der Vorrichtung nach einem der Ansprüche 1 bis 10 auf die Befestigung eines KraftfahrzeugLenkrads (10) auf der Lenksäule (20) insbesondere bei der Montage, um ihm in der Ruhestellung eine Ausrichtung, die der des gelenkten Rades in der geraden Stellung entspricht, und/oder eine bestimmte Tiefe zu verleihen.

## Claims

1. A device (50) for coupling a steering wheel (10) to its shaft (20), allowing their progressive initial relative keying in both the angular and the axial directions, characterized in that it comprises a dog clutch (51) including complementary male elements (512) and female elements (511), some of which are borne by a hub (11) integral with the steering wheel (10) and the others by an end part (21) of the shaft (20), said elements having a configuration such as to define a series of cylindrical peripheral bearing surfaces (513) and provide between two of said successive bearing surfaces (513) radial abutments (514) which face one another with a predetermined angular clearance allowing a relative rotation of fixed maximum amplitude and which bound between themselves cavities (511) and projections (512) engaging in one another, centrifugal expansion means (52) being provided which are disposed directly at least partially in said end part (21) to produce a radial expansion of the series of male bearing surfaces (513) in order to normally obtain an immobilization by the friction of the hub (11) on the end part (21) and exceptionally a locking against rotation by contact of said abutments.

2. A device according to claim 1, characterized in that the cylindrical peripheral bearing surfaces (513) of the male and female elements initially face one another substantially without radial clearance.

3. A device according to either of claims 1 or 2, characterized in that the expansion means (52) are formed by a screw (522) and a corresponding tapped cavity (521) in the end part (21) for receiving the screw, and the envelope of the crests of the threads of the screw has if necessary a conicity tapering from the outside to the inside of the end part (21).

4. A device according to claim 3, characterized in that the threads have a cross-section in the shape of a right-angled triangle, so as to define a flank perpendicular to the axis of the threading.

5. A device according to claim 4, characterized in that said perpendicular flank is that flank on the screw which faces towards the inside of the end part (21) and which on the end part (21) faces towards the outside, so as to develop on tightening a centrifugal component which causes the expansion of the end part (21) in the hub (11).

6. A device according to any of claims 3 to 5, characterized in that the threads of the cavity (521) and the screw (522) which face one another adjacent the end of the screw engaged in the end part (21) locally have some clearance.

7. A device according to either of claims 1 or 2, characterized in that the expansion means (52) are formed by a core (523) having at least two cam volutes (5230) and a complementary corresponding profiled cavity (521) in the end part (21) for receiving the core, so that the rotation of the core (523) in the cavity (521) urges the complementary corresponding volutes (5230) against one another so as to develop a centrifugal component which causes the expansion of the end part (21) in the hub (11).

8. A device according to any of claims 1 to 7, characterized in that the series of cylindrical peripheral bearing surfaces (513) comprises at least in cross-section two arcs of a circle (5130).

9. A device according to any of claims 1 to 8, characterized in that the useful axial length of the expansion means (52) is less than that of the hub (11).

10. A device according to any of claims 1 to 9, characterized in that the number of projections (512) and complementary cavities (511) is preferably between 2 and 16.

11. Application of the device according to any of claims 1 to 10 to the keying of a motor car steering wheel (10) to its shaft (20), more particularly during assembly, so as to impart to the steering wheel at rest an orientation corresponding to the orientation of the steering road wheels in the straight-ahead position and/or a required depth.

**FIG.1**

**FIG.2A**

**FIG.2B**

**FIG.2C**

**FIG. 5**

524

11

523

21

**FIG. 7A**

5130

5140

11-

512

511

-522-

-12-

12-

**FIG. 6**

-11-

524

**FIG. 7B**

-11-

5142

5130

5140

-522-

5142

511

512

FIG.8A

FIG.8B

FIG. 3

FIG. 4